(19) Europäisches Patentamt

European Patent Office

Office européen des brevets

(11) Numéro de publication: **0 108 319**
**B1**

(12) **FASCICULE DE BREVET EUROPEEN**

(51) Int. Cl.⁴: **C 21 B 5/00**, F 23 K 3/02,
**B 65 G 53/46**

(45) Date de publication du fascicule du brevet:
**17.02.88**

(21) Numéro de dépôt: **83110587.9**

(22) Date de dépôt: **24.10.83**

(54) Dispositif d'introduction de quantités dosées de matières pulvérulentes dans un fluide de propulsion pneumatique et application à l'injection de combustibles solides dans un four à cuve.

(30) Priorité: **10.11.82 LU 84462**
**19.05.83 LU 84812**

(43) Date de publication de la demande:
**16.05.84 Bulletin 84/20**

(45) Mention de la délivrance du brevet:
**17.02.88 Bulletin 88/7**

(84) Etats contractants désignés:
**AT BE DE FR GB IT NL SE**

(56) Documents cités:
**DE - A - 2 552 594**
**GB - A - 1 094 112**
**GB - A - 2 086 553**

(73) Titulaire: **PAUL WURTH S.A., 32 rue d'Alsace,**
**L-1122 Luxembourg (LU)**

(72) Inventeur: **Leglile, Edouard, 165 rte de Trèves,**
**Luxembourg (LU)**
Inventeur: **Ulveling, Léon, 30, rue Dr. Jos. Peffer, Howald**
**(LU)**
Inventeur: **Mailliet, Pierre, 1, allée Drosbach, Howald**
**(LU)**

(74) Mandataire: **Meyers, Ernest et al, Office de Brevets**
**Freylinger & Associés 46 rue du Cimetière B.P. 1153,**
**L-1011 Luxembourg (LU)**

### Description

La présente invention concerne un dispositif d'introduction de quantités dosées de matières pulvérulentes dans un fluide de propulsion pneumatique et, à titre d'application préférentielle, l'injection de combustibles solides dans un four à cuve, comprenant un boîtier destiné à être traversé, au moins en partie, axialement par un fluide sous pression et comprenant une ouverture latérale en communication avec un réservoir de matières pulvérulentes, dans lequel peut régner une pression supérieure à celle du fluide de propulsion, ce boîtier renfermant deux douilles coaxiales dont celle qui se trouve à l'intérieur est pourvue d'un alésage axial pour le passage du fluide de propulsion et dont l'une, au moins, est mobile autour de son axe longitudinal et est reliée, à cet effet, à un dispositif d'entraînement approprié, chacune de ces douilles étant pourvue d'une fente au niveau de l'ouverture latérale du boîtier, de façon que ces fentes puissent plus ou moins chevaucher ou se masquer mutuellement par rotation de la douille mobile et définir ainsi un passage plus ou moins grand entre le réservoir de matières pulvérulentes et le fluide de propulsion traversant la douille intérieure.

Un dispositif de ce genre est connu d'après le document GB-A-2 086 553. Dans ce genre de doseur existe un problème de grippage dans la mesure où la matière pulvérulente pourrait pénétrer entre la douille mobile et la surface intérieure du boîtier et entre la surface intérieure de la douille mobile et la surface extérieure de la douille fixe, où cette poudre pourrait augmenter les risques de grippage.

Indépendamment du risque d'usure prématurée à cause du grippage occasionné par les particules pulvérulentes, une fuite de celles-ci réduit les moyens de contrôle du dosage.

Le but de la présente invention est de prévoir un nouveau dispositif d'introduction de quantités dosées de matières pulvérulentes dans un fluide de propulsion pneumatique qui ne présente pas les inconvénients décrits ci-dessus.

A cet effet, le dispositif proposé par l'invention est essentiellement caractérisé en ce que la longueur des deux douilles correspond sensiblement au diamètre de l'ouverture latérale du boîtier, alors qu'il est prévu entre le boîtier et la surface annulaire frontale de la douille mobile une bague annulaire de frottement, la douille mobile étant soumise à la force axiale d'un ressort dont l'action maintient cette douille au contact de cette bague.

La tension du ressort agissant sur la douille mobile est, de préférence, ajustable.

Dans ce mode d'exécution, le diamètre extérieur de la douille extérieure est, de préférence, inférieur au diamètre intérieur du boîtier, afin de définir un espace annulaire libre entre la douille extérieure et le boîtier dans le but de réduire les risques de grippage.

D'autres particularités du dispositif de l'invention ressortiront des revendications 2 à 7, 9 et 10 et de la description détaillée de quelques modes de réalisation, présentés ci-dessous, à titre d'exemple, en référence aux dessins, dans lesquels:

La figure 1 montre une coupe axiale à travers un premier mode de réalisation connu;

La figure 2 montre une coupe axiale à travers un deuxième mode de réalisation connu;

Les figures 3a à 3d montrent des coupes axiales à travers les deux douilles dans différentes positions angulaires de la douille mobile;

Les figures 4, 5, 6 et 7 montrent différentes variantes de forme des fentes dans les douilles dont les figures a, b et c illustrent les différentes positions;

La figure 8 montre un mode de réalisation selon la présente invention,

Et la figure 9 monte une coupe radiale à travers le dispositif selon la figure 8.

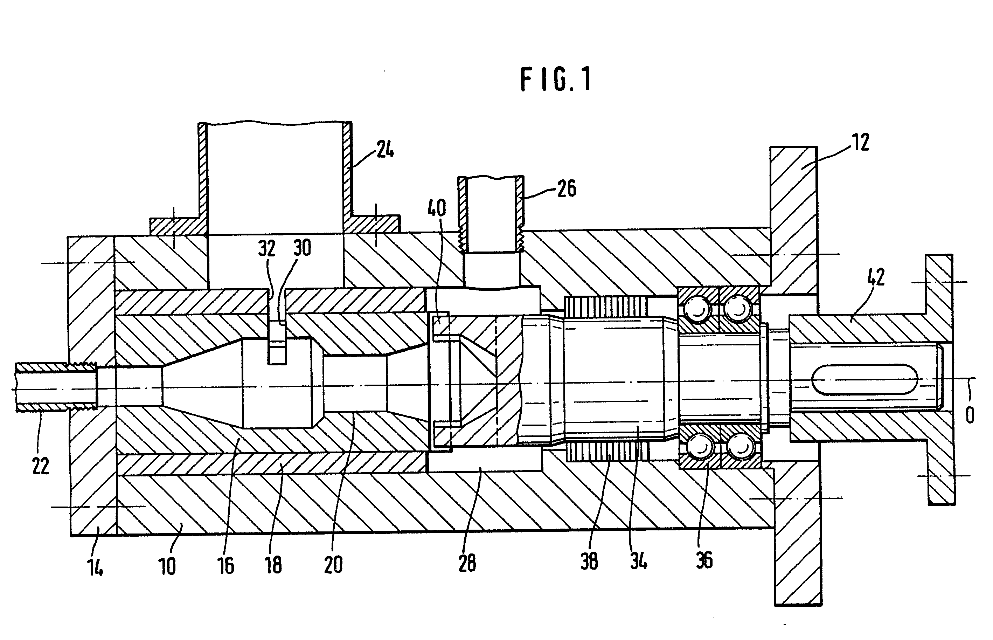

Le dispositif de dosage représenté à la figure 1 est constitué d'un boîtier cylindrique 10 dont les deux bases sont fermées respectivement par une bride de fixation 12 et une plaque frontale 14. A l'intérieur du boîtier 10 se trouvent deux douilles coaxiales 16 et 18. Dans le mode de réalisation représenté, la douille 18 est fixe et solidaire de la plaque frontale 14, alors que la douille 16 peut tourner autour de l'axe longitudinal 0 comme décrit, plus en détail, par la suite. La douille intérieure 16 comporte un alésage axial 20 communiquant avec une conduite de transport pneumatique 22.

Le boîtier 10 comporte deux tubulures latérales 24 et 26, la tubulure 24 communiquant avec un réservoir de matières pulvérulentes, tandis que la tubulure 26 est branchées sur une source d'air sous pression pour entraîner la matière pulvérulente à travers la conduite 22.

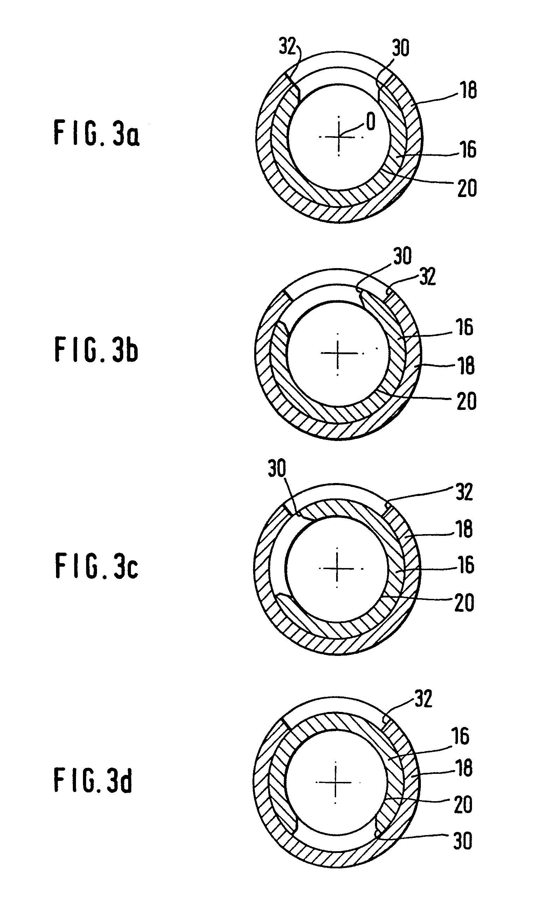

La tubulure 26 communique à travers une chambre annulaire 28 directement avec l'alésage axial 20 de la douille intérieure 16. Les deux douilles 16 et 18 comportent chacune, au niveau de la tubulure 24 d'admission de la matière pulvérulente une fente latérale 30 respectivement 32, qui, suivant la position angulaire de la douille mobile 16, définissent un passage plus ou moins grand entre cette tubulure 24 et l'alésage axial 20. Les figures 3a à 3d qui représentent des coupes transversales au niveau des fentes 30 et 32 montrent différentes positions angulaires de la douille mobile intérieure 16. Dans la position selon la figure 3a la douille 16 est tournée de façon que les fentes 30 et 32 soient parfaitement alignées l'une sur l'autre définissant ainsi un passage à ouverture maximale entre la tubulure 24 et l'alésage 20. Partant de la position selon la figure 3a, une rotation de la douille 16 réduit progressivement la section de l'ouverture entre la tubulure 24 et l'alésage 20, comme le montrent les figures 3b et 3c, cette dernière correspondant à l'ouverture minimale. La figure 3d montre la fermeture complète du dispositif.

En vue de la rotation de la douille mobile 16, il est prévu un arbre d'entraînement 34 disposé dans le prolongement de la douille 16 du côté opposé à la conduite d'évacuation 22. Cet arbre 34 est logé dans le boîtier 10 par l'intermédiaire d'un roulement et d'une bague d'étanchéité 38 évitant les fuites de l'air comprimé. Cet arbre d'entraînement 34 est rendu solidaire en rotation de la douille mobile 16, par exemple au moyen de deux griffes 40 diamétralement opposées et pénétrant dans des rainures frontales correspondantes de la douille 16.

Cet arbre d'entraînement 34 est relié par une pièce intermédiaire 42 à un moteur électrique pas à pas. Dans un prototype on a utilisé un moteur provoquant une rotation de 0,36° par impulsion électrique à une vitesse de 1 à 2 tours par minute.

Le fonctionnement du dispositif ressort clairement de sa description. L'air sous pression traverse, en provenance de la tubulure 26, la chambre annulaire 28, l'alésage interne 20 en direction de la conduite pneumatique 22, en entraînant au passage la matière pulvérulente introduite à travers l'ouverture calibrée définie par les fentes 30 et 32 sous l'action d'une différence de pression existant entre le réservoir de matière pulvérulente non montré et la pression de l'air dans l'alésage 20.

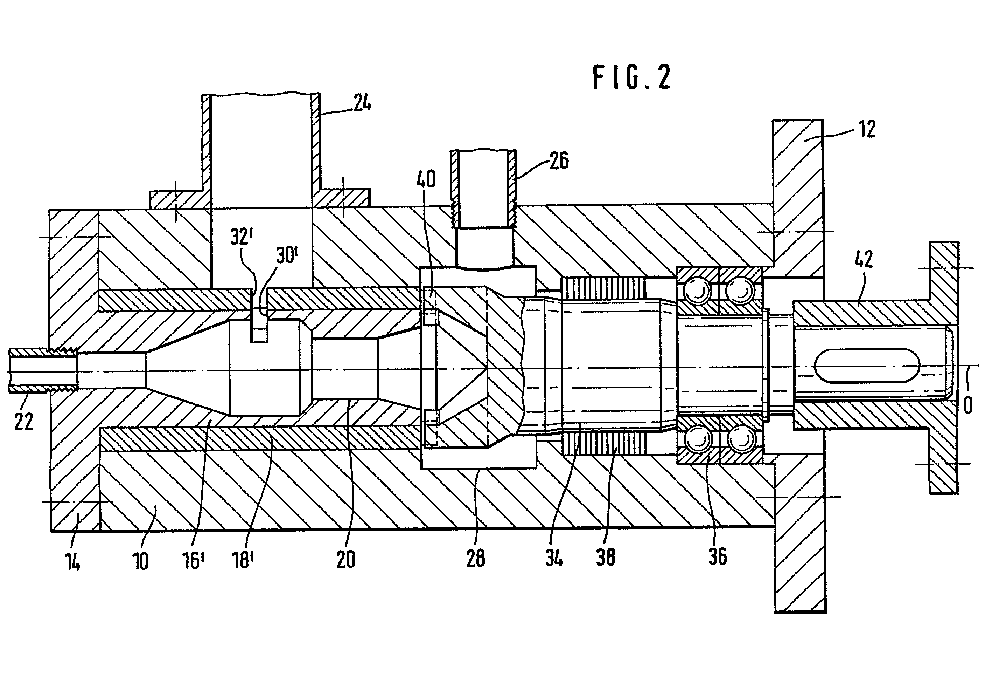

Dans le mode de réalisation de la figure 2 on a utilisé les mêmes chiffres de références pour désigner les mêmes éléments que ceux du mode de réalisation de la figure 1 et les mêmes chiffres de références affectés de l'indice ' pour désigner des éléments analogues remplissant les mêmes fonctions.

La différence essentielle entre les deux modes de réalisation est que dans le dispositif selon la figure 2 la douille intérieure 16' est fixe et solidaire de la plaque frontale 14 alors que la douille extérieure 18' est mobile et reliée à cet effet à l'arbre d'entraînement 34 de la même manière que dans le mode de réalisation de la figure 1. Les deux fentes 30' et 32' prévues dans les douilles 16' et 18' définissent également la section du passage pour la matière pulvérulente. Si le fonctionnement du dispositif selon la figure 2 est absolument identique à celui du dispositif de la figure 1, il peut, néanmoins, présenter un certain avantage du fait que c'est la douille extérieure qui est mobile au lieu de la douille intérieure. En effet, la matière pulvérulente étant amenée sous pression à travers la tubulure 24 pourrait avoir tendance à former un pont autour de la fente 32 ou 32' de la douille 18 ou 18' et si c'est cette douille 18' qui est mobile, le risque de formation d'un tel pont est, bien entendu, considérablement réduit.

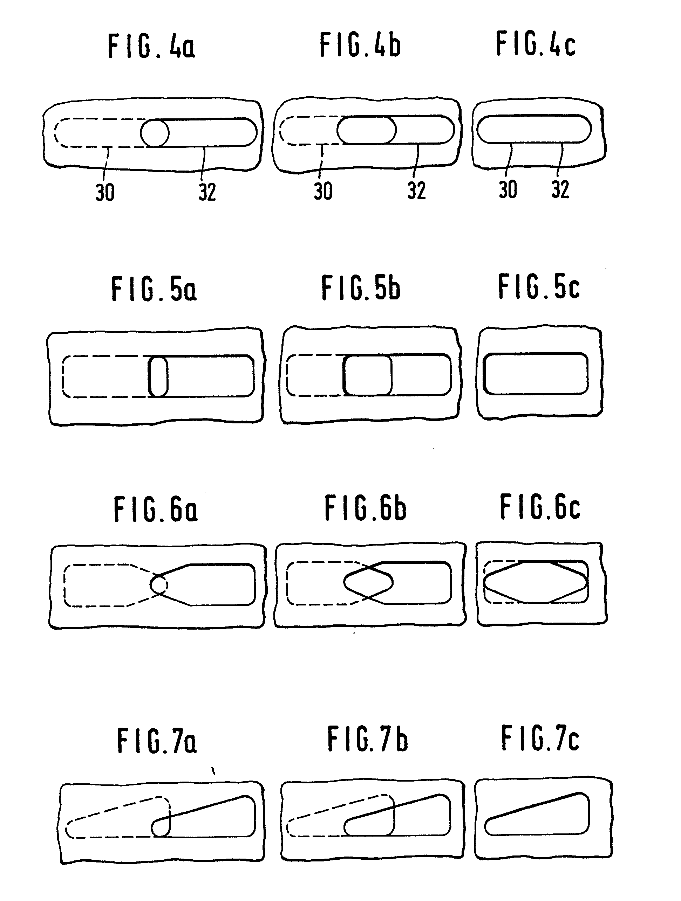

Les figures 4, 5, 6 et 7 montrent différentes formes de fentes dans différentes positions telles que vues à travers l'ouverture 24 et développées en plan. Dans le cas des figures 4 il s'agit de simples fentes allongées 30 et 32 qui, dans la position selon la figure 4a ne chevauchent que très faiblement, définissant ainsi une section circulaire minimale de passage de la matière. Une rotation de la douille mobile augmente la section de l'ouverture comme le montre la figure 4b, la section de cette ouverture devenant maximale dans la position de la figure 4c où les deux fentes 30 et 32 sont en position d'alignement.

Pour les figures 5, 6 et 7 on a repris des positions correspondant aux positions des figures 4a, 4b et 4c avec, toutefois, des variantes de formes des fentes. Les fentes de la série des figures 5 sont plus larges que celles des séries des figures 4 ce qui permet un débit plus élevé.

Les formes particulières des séries des figures 6 et 7 présentent la particularité que la modification de la section de l'ouverture se fait aussi bien en longueur qu'en largeur. Ceci présente l'avantage que la variation de la section est plus rapide ou que la douille mobile tourne moins pour une même modification. La modification de la section en largeur peut également contribuer à une réduction du risque de formation de pont.

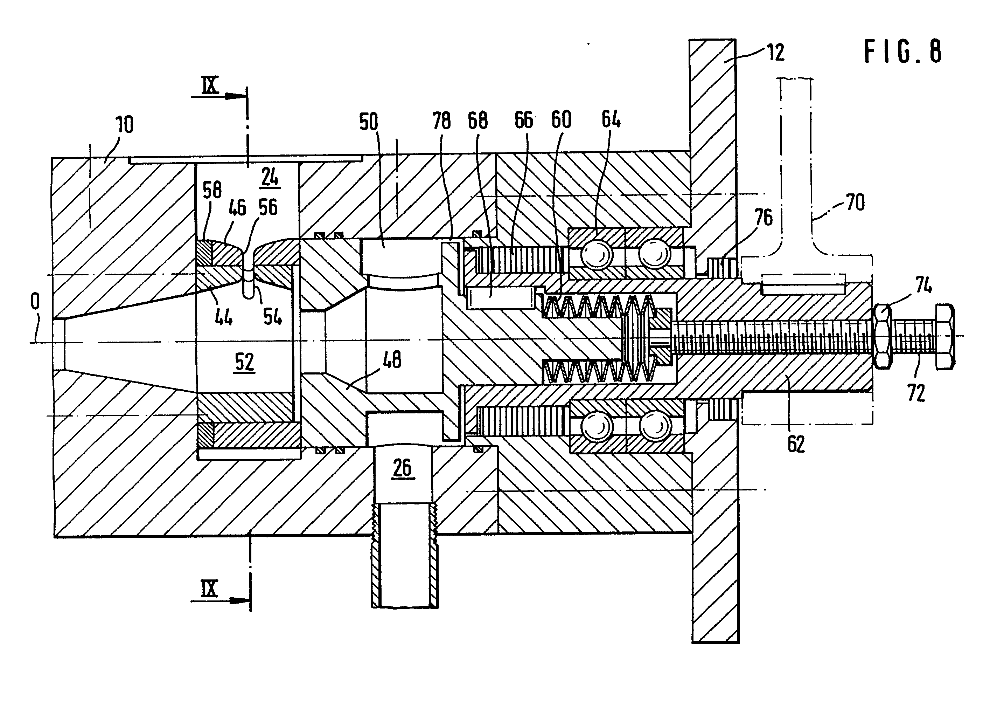

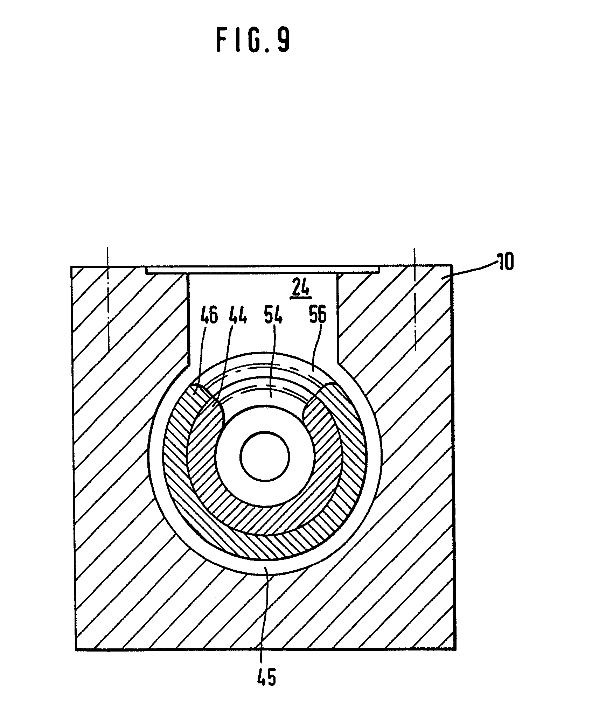

Les figures 8 et 9 montrent à titre d'exemple un mode de réalisation du dispositif selon la présente invention. A l'intérieur du boîtier 10 se trouvent, au niveau de l'ouverture 24, les deux douilles de dosage 44 et 46 correspondant aux douilles de dosage décrites ci-dessus. Dans l'exemple représenté, la douille 44 est fixe et solidaire du boîtier 10, tandis que la douille 46 est mobile autour de l'axe longitudinal O et forme l'extrémité avant d'un corps cylindrique 48 pouvant tourner et coulisser longitudinalement dans un alésage du boîtier 10. L'air sous pression est admis à travers une chambre annulaire 50 de ce corps 48 et la partie centrale creuse de celui-ci dans une chambre de mélange 52 formée à l'intérieur de la douille intérieure 44 et se prolongeant à travers l'axe du boîtier 10 vers une conduite de transport pneumatique non montrée.

Les deux douilles 44 et 46 comportent respectivement des fentes de dosage 54, 56 (voir également figure 9) dont l'opération est commandée par rotation de la douille mobile autour de l'axe O, déjà décrit en référence aux figures précédentes.

La différence essentielle entre le mode d'exécution proposé par les figures 8 et 9 et celui des figures précédentes réside dans la longueur axiale des douilles de dosage. Alors que selon les figure 1 et 2 ces douilles ont une longueur relativement importante pour isoler l'intérieur du doseur du réservoir de matières pulvérulentes, la longueur des douilles selon la figure 8 est réduite au strict minimum. Dans les doseurs décrits ci-dessus, notamment dans la version de la figure 2, la matière pulvérulente pourrait pénétrer, sur la partie gauche des figures, entre la douille mobile et la surface intérieure du boîtier et entre la surface intérieure de la douille mobile et la surface extérieure de la douille fixe, où cette poudre pourrait augmenter les risques de grippage.

Par contre, dans la version selon la figure 8, la poudre pulvérulente peut pénétrer, tout au plus, entre les deux douilles mais, étant donné que, d'une part, cette surface est très réduite et, d'autre part, on peut laisser un certain jeu entre ces deux douilles, les risques de grippage sont très réduits. Un certain jeu est, en effet, possible entre les deux douilles, étant donné que l'étanchéité est assurée, selon une autre caractéristique de l'invention, par une bague de frottement 58, par exemple réalisée en alliage de teflon et bronze, disposée, dans le mode de réalisation représenté, autour de la douille fixe 44 entre le boîtier 10 et l'extrémité de la douille mobile 46. Cette douille mobile 46 est maintenue sous l'action d'un ressort contre la bague 58.

En outre, comme le montre la figure 9, le diamètre extérieur de la douille extérieure 46 est inférieur au diamètre de l'alésage dans le boîtier 10 de façon à définir un espace annulaire libre 45 dans lequel il n'y a pas de risque de grippage.

Le maintien élastique de la douille 46 contre la bague 58 est assuré par un ressort 60, par exemple du type «ressort Belleville» coincé entre le corps 48 et un manchon 62. Ce manchon est fixe dans le sens axial mais peut tourner autour de l'axe O grâce à son montage dans des roulements 64 et des bagues d'étanchéité 66, 76. L'action du ressort 60 s'exerce, par conséquent, sur le corps 48 et la douille 46 en direction de la bague de frottement 58. L'indépendance du mouvement longitudinal du corps 48 par rapport au manchon 62 et la dépendance des mouvements angulaires entre ces deux pièces peut être assurée par tout moyen connu, par exemple, tel que représenté sur la figure à l'aide d'une clavette 68. La rotation du manchon 62, par exemple au moyen d'une manette telle que symbolisée par la référence 70 provoque la rotation de la douille mobile 46 et un masquage plus ou moins grand des fentes 54 et 56 comme expliqué en référence aux figures précédentes.

Dans un mode de réalisation préféré, la pression du ressort 60 est ajustable, par exemple au moyen d'une tige de réglage 72 et d'un écrou de fixation 74.

Pour réduire encore davantage la longueur des douilles et, par la même occasion les risques de grippage, l'ouverture 24 peut être oblongue au lieu d'être circulaire.

Enfin, pour améliorer la résistance mécanique des deux douilles, celles-ci sont avantageusement fabriquées en tungstène fritté ce qui les rend extrêmement dures et usinables seulement par les meules diamantées.

Il reste finalement à noter que, pour éviter que l'action du ressort 60 soit compensée ou annulée par la pression de l'air admis dans la chambre 52, l'air sous pression est également admis à travers des canaux ou interstices 78 dans la chambre renfermant le ressort 60.

Comme dans le cas de la figure 2, il est également possible de prévoir la douille mobile à l'intérieur de la douille fixe.

**Revendications**

1. Dispositif d'introduction de quantités dosées de matières pulvérulentes dans un fluide de propulsion pneumatique, comprenant un boîtier (10) destiné à être traversé, au moins en partie, axialement par un fluide sous pression comprenant une ouverture latérale (24) en communication avec un réservoir de matières pulvérulentes dans lequel peut régner une pression supérieure à celle du fluide de propulsion, ce boîtier (10) renfermant deux douilles coaxiales (16, 18) (16', 18') (44, 46) dont celle qui se trouve à l'intérieur est pourvue d'un alésage axial (20, 52) pour le passage du fluide de propulsion et dont l'une, au moins, est mobile autour de son axe longitudinal (O) et est reliée, à cet effet, à un dispositif d'entraînement approprié, chacune des douilles (16, 18) (16', 18') (44, 46) étant pourvue d'une fente (30, 32) (30', 32') (54, 56) au niveau de l'ouverture latérale (24) du boîtier (10) de façon que ces fentes puissent plus ou moins chevaucher ou se masquer mutuellement par rotation de la douille mobile (16), 18'), (46) et définir ainsi un passage plus ou moins grand entre le réservoir de matières pulvérulentes et le fluide de propulsion traversant la douille intérieure (16, 16', 44), caractérisé en ce que la longueur des deux douilles (44, 46) correspond sensiblement au diamètre de l'ouverture latérale (24) du boîtier (10), en ce qu'il est prévu entre le boîtier (10) et la surface annulaire frontale de la douille mobile (46) une bague annulaire (58) de frottement et en ce que la douille mobile (46) est soumise à la force axiale d'un ressort (60) dont l'action maintient cette douille (46) au contact de cette bague (58).

2. Dispositif selon la revendication 1, caractérisé en ce que la douille intérieure (16) est rotative, tandis que la douille extérieure est solidaire du boîtier fixe.

3. Dispositif selon la revendication 1, caractérisé en ce que la douille intérieure (16') (44) est fixe et solidaire du boîtier (10) et la douille extérieure (18') (46) mobile.

4. Dispositif selon l'une quelconque des revendications 1 à 3, caractérisé en ce que la douille mobile (16, 18', 46) est reliée par l'intermédiaire d'un arbre d'entraînement rotatif à un moteur électrique pas à pas.

5. Dispositif selon l'une quelconque des revendications 1 à 4, caractérisé en ce que les fentes (30, 32) (30', 32') (54, 56) ont une forme allongée à bord arrondi.

6. Dispositif selon l'une quelconque des revendications 1 à 4, caractérisé en ce que les fentes (30, 32) (30', 32') (54, 56) ont une forme allongée dont les bords qui chevauchent sont en forme de pointe.

7. Dispositif selon l'une quelconque des revendications 1 à 4, caractérisé en ce que les fentes (30, 32) (30', 32') (54, 56) ont une forme triangulaire.

8. Dispositif selon la revendication 1, caractérisé en ce que la tension du ressort (60) agissant sur la douille mobile (46) est ajustable.

9. Dispositif selon la revendication 1, caractérisé en ce que les douilles sont réalisées en tungstène fritté.

10. Dispositif selon la revendication 1, caractérisé en ce que ladite ouverture (24) a une forme oblongue dont le plus grand diamètre est perpendiculaire à l'axe des douilles (44, 46).

11. Dispositif selon la revendication 1, caractérisé par un espace annulaire (45) entre la douille extérieure et la paroi intérieure du boîtier (10).

12. Application d'un dispositif selon l'une quelconque des revendications 1 et 11 dans une installation d'injection de combustibles solides dans un four à cuve.

## Claims

1. Device for the introduction of dosed quantities of pulverulent substances into a pneumatic propulsion fluid, comprising a box (10) designed to be at least partly traversed in the axial direction by a fluid under pressure and comprising a side aperture (24) communicating with a tank for pulverulent substances, wherein the pressure may be above that of the propulsion fluid, the said box (10) containing two coaxial sockets (16, 18) (16', 18') (44, 46), the inner socket having an axial bore (20, 52) to give passage to the propulsion fluid, at least one socket being movable about its longitudinal axis (O) and connected for this purpose to a suitable driving device, each of the sockets (16, 18), (16', 18'), (44, 46) being provided with a slit (30, 32), (30', 32'), (54, 56) facing the side aperture (24) of the box (10), so that these slits can overlap or mask each other upon rotation of the movable socket (16), (18'), (46), thus defining a passage, wider or narrower as the case may be, between the tank containing the pulverulent substances and the propulsion fluid passing through the inner socket (16, 16', 44), characterised in that the length of the two sockets (44, 46) is approximately equal to the diameter of the lateral aperture (24) of the box (10), in that an annular friction ring (50) is provided between the box (10) and the annular front surface of the movable socket (46), and in that said movable socket (46) is subjected to the axial force of a spring (60) of which the action keeps the said socket (46) in contact with the said ring (58).

2. Device in accordance with Claim 1, characterised in that the inner socket (16) is rotary while the outer socket is integral with the fixed box.

3. Device in accordance with Claim 1, characterised in that the inner socket (16', 44) is fixed and integral with the box (10) and the outer socket (18', 46) is movable.

4. Device in accordance with any one of Claims 1 to 3, characterised in that the movable socket (16, 18', 46) is connected to an electric stepping motor by a rotary driving shaft.

5. Device in accordance with any one of Claims 1 to 4, characterised in that the slits (30, 32), (30', 32'), (54, 56) are elongated with a rounded edge.

6. Device in accordance with any one of Claims 1 to 4, characterised in that the slits (30, 32), (30', 32'), (54, 56) have an elongated form of which the overlapping edges take the form of a point.

7. Device in accordance with any one of Claims 1 to 4, characterised in that the slits (30, 32), (30', 32'), (54, 56) are of triangular shape.

8. Device in accordance with Claim 1, characterised in that the tension of the spring (60) acting on the movable socket (46) is adjustable.

9. Device in accordance with Claim 1, characterised in that the sockets are made of fritted tungsten.

10. Device in accordance with Claim 1, characterised in that said aperture (24) takes the form of an oblong of which the major diameter is perpendicular to the axis of the socket (44, 46).

11. Device in accordance with Claim 1, characterised by an annular chamber (45) between the outer socket and the inner surface of the box (10).

12. Application of a device according to any one of Claims 1 to 11 to an installation for the injection of solid fuels into a shaft furnace.

## Patentansprüche

1. Vorrichtung zum Einbringen von dosierten Mengen von pulverförmigen Materialien in ein Druckluftantriebs-Fluid, aus einem Gehäuse (10), das zumindest teilweise in axialer Richtung von einem unter Druck stehenden Fluid durchströmt wird, und das eine seitliche Öffnung (24) aufweist, die in Verbindung mit einem Vorratsbehälter mit pulverförmigen Materialien steht, in dem ein Druck herrschen kann, der grösser als der Druck des Antriebsfluids ist, wobei dieses Gehäuse (10) zwei koaxiale Hülsen (16, 18) (16', 18') (44, 46) aufweist, von denen die innere mit einer axialen Bohrung (20, 52) für das Antriebsfluid versehen ist, und von denen zumindest eine um ihre Längsachse (O) drehbar ist und mit einer geeigneten Antriebsvorrichtung verbunden ist, wobei jede der Hülsen (16, 18) (16', 18') (44, 46) im Bereich der seitlichen Öffnung (24) des Gehäuses (10) mit einem Spalt (30, 32) (30', 32') (54, 56) versehen ist, und zwar in einer solchen Weise, dass sich diese Spalte durch Drehen der beweglichen Hülse (16) (18) (46) mehr oder weniger überlappen oder überdecken, und dabei eine mehr oder weniger grosse Durchlassöffnung zwischen dem Vorratsbehälter mit pulverförmigen Materialien und der inneren Hülse (16, 16', 44) mit dem Antriebsfluid bestimmen, dadurch gekennzeichnet, dass die Länge der zwei Hülsen (44, 46) im wesentlichen dem Durchmesser der seitlichen Öffnung (24) des Gehäuses (10) entspricht, dass zwischen dem Gehäuse (10) und der vorderen, ringförmigen Oberfläche der beweglichen Hülse (46) ein Reibring (58) vorgesehen ist, und dass die bewegliche Hülse (46) der axialen Kraft einer Feder (60) unterworfen ist, die diese Hülse (46) in Kontakt mit diesem Ring (58) hält.

2. Vorrichtung gemäss Anspruch 1, dadurch gekennzeichnet, dass die innere Hülse (16) drehbar ist, während die äussere Hülse mit dem stationären Gehäuse fest verbunden ist.

3. Vorrichtung gemäss Anspruch 1, dadurch gekennzeichnet, dass die innere Hülse (16') (44) stationär ist und mit dem Gehäuse (10) fest verbunden ist, und die äussere Hülse (18') (46) beweglich ist.

4. Vorrichtung gemäss einem der Ansprüche 1 bis 3, dadurch gekennzeichnet, dass die bewegliche Hülse (16, 18', 46) über eine Antriebswelle mit einem elektrischen Schrittmotor verbunden ist.

5. Vorrichtung gemäss einem der Ansprüche 1 bis 4, dadurch gekennzeichnet, dass die Spalte (30, 32) (30', 32') (54, 56) eine längliche Form mit verrundetem Rand aufweisen.

6. Vorrichtung gemäss einem der Ansprüche 1 bis 4, dadurch gekennzeichnet, dass die Spalte (30, 32) (30', 32') (54, 56) eine längliche Form aufweisen, wobei die sich überlappenden Rändern eine Spitze bilden.

7. Vorrichtung gemäss einem der Ansprüche 1 bis 4, dadurch gekennzeichnet, dass die Spalte (30, 32) (30', 32') (54, 56) eine dreieckige Form aufweisen.

8. Vorrichtung gemäss Anspruch 1, dadurch gekennzeichnet, dass die Spannung der auf die bewegliche Hülse (46) wirkenden Feder (60) einstellbar ist.

9. Vorrichtung gemäss Anspruch 1, dadurch gekennzeichnet, dass die Hülsen aus gesintertem Wolfram hergestellt sind.

10. Vorrichtung gemäss Anspruch 1, dadurch gekennzeichnet, dass die besagte Öffnung (24) eine längliche Form aufweist, wobei der grössere Durchmesser senkrecht zu der Achse der Hülsen (44, 46) verläuft.

11. Vorrichtung gemäss Anspruch 1, gekennzeichnet durch einen ringförmigen Zwischenraum (45) zwischen der äusseren Hülse und der inneren Wand des Gehäuses (10.

12. Anwendung einer Vorrichtung gemäss einem der Ansprüche 1 bis 11 bei einer Anlage zum Einspritzen von flüssigen Brennstoffen in einen Schachtofen.

# FIG.1

0 108 319

FIG.2

FIG.3a

FIG.3b

FIG.3c

FIG.3d

FIG.4a  FIG.4b  FIG.4c

30    32     30    32     30    32

FIG.5a  FIG.5b  FIG.5c

FIG.6a  FIG.6b  FIG.6c

FIG.7a  FIG.7b  FIG.7c

FIG.8

# FIG.9